# EUROPEAN PATENT APPLICATION

(11) **EP 3 722 127 A1**
(43) Date of publication of application: **14.10.2020**
(21) Application number: 19382256.6
(22) Date of filing: 08.04.2019
(51) Int. Cl.: B60J 5/04

(54) **SEALING DOOR ASSEMBLY FOR VEHICLE DOORS**

(71) Applicant: Grupo Antolin-Ingenieria, S.A., 09007 Burgos (ES)
(72) Inventor: Revilla López, Fernando, 09007 BURGOS (ES); Gómez Cámara, David, 09007 BURGOS (ES)
(74) Representative: Capitán García, Maria Nuria

(57) **Abstract**

Sealing door assembly for vehicle doors comprising a sealing panel and a door metal sheet connected by fixing means comprising quarter turn clips. The sealing panel fulfils the sealing function between the sealing panel and the door metal sheet firstly by providing a peripheral sealing strip extended along the perimeter of the main surface of the sealing panel configured to be in contact with the door metal sheet, and secondly by providing several local sealing rings in correspondence with each mounting opening provided in the sealing panel.

## Description

### FIELD OF THE INVENTION

The present invention relates to a sealing door assembly for vehicle doors comprising a sealing panel and a door metal sheet connected by fixing means comprising quarter turn clips. The sealing panel fulfils the sealing function between the sealing panel and the door metal sheet firstly by providing a peripheral sealing strip extended along the perimeter of the main surface of the sealing panel configured to be in contact with the door metal sheet, and secondly by providing several local sealing rings in correspondence with each mounting opening provided in the sealing panel.

### BACKGROUND OF THE INVENTION

A vehicle door typically comprises an upper window frame and a door shell structure having an outer door metal sheet facing the vehicle exterior joined to an inner door metal sheet facing the vehicle interior.

The door shell structure houses several door functional components such as the window regulator, the loudspeaker, or the door lock.

In order to access the interior of the door shell structure for carrying out the mounting/dismounting operations of said functional components, the inner door metal sheet comprises one or more access openings.

In order to avoid the entrance of water and dust inside the vehicle interior through the door shell, sealing panels are commonly used for covering the different access openings provided in the inner door metal sheet. Thus, the sealing panel divides the vehicle door into a wet area and a dry area.

It is known sealing panels having a peripheral sealing strip along its perimeter which in addition to fulfilling the sealing function, they also perform other additional functions such as bearing some functional components. Some examples are EP1488944 or KR20070087971.

On the other hand, with the objective to enhance the assembly efficiency of the sealing panel to the door metal sheet, it is desirable to use quick assembly fasteners for connecting the sealing panel and the door metal sheet. One of the available options of this kind of quick assembly fasteners is quarter turn clips.

A quarter turn clip passes through aligned non-circular mounting openings of the sealing panel and the door metal sheet, both aligned in position and orientation each other, and then it is rotated in order to carry out the connection between them.

In this way, the sealing panel can be connected to the door metal sheet in a quick and simple manner.

This kind of clips should perform several functions during the assembly process such as ensuring the insertion position by aligning the clip and the mounting opening, the angular position of the clip with regard to the opening, and also in the final assembly position ensuring the assembly tension and the sealing of the openings.

One known example disclosing the use of quarter turn clips for connecting a sealing panel to a door metal sheet is WO2018089045.

This patent discloses a sealing panel having a peripheral sealing strip and several fixing means comprising a mounting opening, a sealing housing, and a quarter turn clip having a sealing ring wherein the quarter turn clip is housed within the mounting opening and the sealing housing.

This particular assembly allows connecting the sealing panel to the door metal sheet and at the same time allows ensuring both, the sealing of the door metal sheet by the compression of the peripheral sealing strip against the door metal sheet due to the force exerted by each quarter turn clip, and the local sealing of each mounting opening by the combination of the sealing housing with a sealing ring provided around the head of the quarter turn clip contacting said sealing housing.

Said quarter turn clip disclosed in WO2018089045 comprises a shaft, a head placed at one end of the shaft and having a sealing ring, and a retaining element having a retention surface placed at the opposite end of the shaft wherein the retention surface is provided in order to press on the more distant side of the door metal sheet from the sealing panel and in this way connecting the sealing panel and the door metal sheet.

In order to make easier the assembly process of the sealing panel to the door metal sheet, said quarter turn clip also comprises pre-assembly securing clips fixing provisionally the quarter turn clip to its corresponding mounting opening provided in the sealing panel. Particularly, this provisionally fixation is advantageous in the transport, handling and pre-assembly of the sealing panel operations.

Said pre-assembly securing clips are provided at the shaft of the quarter turn clip. They collaborate with configurations provided in the mounting opening of the sealing panel in order to retain the quarter turn clip along the assembly direction.

According to this particular pre-assembly position the quarter turn clip disclosed in WO2018089045 is designed in such a way that the retaining element is housed inside the mounting opening.

In order to complete the assembly process, both, the sealing panel and the door metal sheet are configured to adopt a pre-assembly position in which the quarter turn clip is pre-mounted in the sealing panel, and in which the sealing panel is ready to be connected with door metal sheet, and to adopt an assembly position in which both components are connected by the quarter turn clip.

According to the pre-assembly position the sealing panel is arranged facing the vehicle door sheet in such a way that the quarter turn clip is aligned with the mounting opening of the vehicle door sheet along the assembly direction and the peripheral sealing strip is uncompressed and in contact with the surface of the door metal sheet facing the sealing panel.

As the retaining element is inside the mounting opening of the sealing panel, it is necessary that the operator press the head of the quarter turn clip against the door metal sheet in order to move the clip along the assembly direction.

During this linear movement of the quarter turn clip, the pre-assembly securing clips flex and overcome the retention provided inside the mounting opening, and in this way the retaining element overcomes the mounting opening in order to be inserted through the non-circular mounting opening of the door metal sheet.

This linear movement of the quarter turn clip is stopped when the head of the quarter turn clip contacts the surroundings of the mounting opening of the sealing panel. At this moment, the retaining element has overcome the non-circular mounting opening of the door metal sheet and its retaining surface is facing the more distant side from the sealing panel around the non-circular mounting opening of the door metal sheet.

According to this position, the quarter turn clip is ready to be rotated in order the retaining surface of the retaining element presses on the door metal sheet, and in this way reaching the assembly position by connecting the sealing panel and the door metal sheet.

According to the particular configuration disclosed in WO2018089045 the quarter turn clip in order to reach the assembly position has to complete a linear displacement extending from the retention surface of the retaining element placed inside the mounting opening of the sealing panel, to the more distant side from the sealing panel around the non-circular mounting opening of the door metal sheet.

Therefore, this linear displacement is the distance between the side of the sealing panel and the side of the door metal sheet which are faced in the assembly position. This distance depends on the dimensions of the sealing strip which is uncompressed and in contact with the door metal sheet in the pre-assembly position.

In order to the quarter turn clip can traverse this linear displacement, the length of the shaft of the quarter turn clip has to be enough to allow the retaining surface reaching the more distant side from the sealing panel around the non-circular mounting opening of the door metal sheet, before the linear movement of the quarter turn clip is stopped by the interference between the head of the clip and the surface of the sealing panel around the mounting opening facing the head of the quarter turn clip.

Thus the farther away the retaining surface of the retaining element is from the more distant side of the sealing panel around the non-circular mounting opening of the door metal sheet in the pre-assembly position, the longer the length of the shaft of the clip must be, and consequently, the total length of the quarter turn clip.

In addition, since that the head of the quarter turn clip has a sealing ring in order to locally seal the mounting opening collaborating with the wall of the sealing housing, the height of the sealing housing which collaborates with the sealing ring is also affected by said length.

The total length of the quarter turn clip is particularly relevant because affects the packaging of the sealing panel, that is, the space occupied by the sealing panel in the assembly direction.

Getting a high compact packaging in the assembly direction is a very relevant issue, and it is specially relevant in two situations, before the sealing panel is assembled to the door metal sheet, that is during the transport of it, and once the sealing panel and the door metal sheet are connected.

In view of the disadvantages mentioned above, the object of the invention is a sealing door assembly for vehicle doors comprising a sealing panel and a door metal sheet connected by a quarter turn clip wherein the sealing function is fulfilled, and wherein the packaging in the assembly direction of the sealing panel during the transport operation and the packaging of the sealing door assembly after the assembly process is completed is minimized without compromising any essential function of the quarter turn clip.

### DESCRIPTION OF THE INVENTION

The present invention is established and characterised by the independent claims, while the dependent claims describe additional features thereof.

The configuration of the sealing door assembly and particularly the configuration of the sealing panel and the fixing means and the relative position between said components, allows designing a quarter turn clip having a short length in order to minimize the space occupied by the sealing panel with the fixing means in the assembly direction and in this way compacting the packaging during the transport operation of the sealing panel and once the sealing panel and door metal sheet are connected.

It is because the retaining surface of the retaining element forming the quarter turn clip is arranged in the pre-assembly position between the forth contacting surface of the sealing panel and the first contacting surface of the door metal sheet and therefore outside the mounting opening of the sealing panel.

In this way the linear displacement that the retaining element has to traverse in order to press on the second contacting surface of the door metal sheet, reaching in this way the assembly position, is minimized and consequently the length of shaft of the quarter turn clip can be shortened.

On the other hand, the height of the wall of the sealing housing can be shortened as well in order to reduce even more the packaging in the assembly direction.

This is because the main function of the sealing housing is collaborating with the sealing ring of the head of the quarter turn clip in order to ensure the sealing of the mounting opening of the sealing panel.

As the quarter turn clip length is shortened, the height of the wall of the sealing housing can be adjusted to the minimal length necessary to collaborate with the sealing ring in order to ensure the sealing function.

On the other hand, it is desirable that the quarter turn clip is pre-mounted in the sealing panel according to a predefined position comprising a particular angular position regarding the first non-circular mounting opening of the door metal sheet in order to the operator in the pre-assembly position, only has to press and move linearly the quarter turn clip along the assembly direction. That is, when the sealing panel is faced to the door metal sheet in the pre-assembly positon, the quarter turn clip is ready to be inserted inside the first non-circular mounting opening by an only linear movement. Then, once the quarter turn clip has passed through the non-circular mounting opening of the door metal sheet, the operator carries out the rotation of the quarter turn clip for connecting the sealing panel and the door metal sheet.

According to the prior art configuration discussed, as the retaining element is arranged in the pre-assembly position inside the mounting opening of the sealing panel, the angular position can be ensured by the interference provided between the retaining element and the geometry of the mounting opening.

According to the invention and in order to keep this functionality of the door sealing assembly, anti-rotation means are provided in the shaft of the quarter turn clip. In this way the shortening of the total length of the clip can be kept.

The collaboration between the pre-assembly detent means placed in the shaft of the quarter turn clip, and the pre-assembly counter detent means placed in the second non-circular mounting opening, helps to prevent the rotation movement around the assembly direction "m" of the clip in the pre-assembly position. However, the strength provided by these means is not enough to prevent the rotational movement of the quarter turn clip.

By providing an additional anti-rotation elements placed between the pre-assembly detent means and the retaining element, the anti-rotation function carried out by the pre-assembly detent means and the counter pre-assembly detent means is considerably strengthened, and at the same time the shortening of the total length of the clip can be kept.

According to this configuration, the forces exerted in favour to the rotational movement of the quarter turn clip before the quarter turn clip is inserted through the first non-circular mounting opening of the door metal sheet, can be distributed among the pre-assembly detent means and the additional anti-rotation elements in such a way that the prevention of the rotational movement of the quarter turn clip is ensured.

Thus the predefined angular position of the quarter turn clip can be ensured during the transport and during the subsequent handling until the assembly process starts.

Additionally, this particular configuration, allows keeping the angular position of the quarter turn clip even in a case in which the operator carries out a wrong assembly process in which try rotating the quarter turn clip before moving it linearly, being the linear movement the only way to overcome the interference provided by the anti-rotation means.

Due to the contact between the sealing ring of the quarter turn clip head and the wall of the sealing housing in the pre-assembly position, the quarter turn clip has an increased stability during the operations of transport and handling of the sealing panel, because the head of the quarter turn clip is completely housed inside the sealing housing instead of being unprotected outside the sealing housing, and consequently more susceptible to be damaged.

In the optional case in which the thickness "e" of the retaining element is less than the distance "z" in the assembly direction "m" between the forth contacting surface and the first contacting surface in the pre-assembly position, the length of the quarter turn clip in the assembly direction "m" can be further shortened and consequently, a more compact packaging of the assembly can be achieved in the assembly direction "m".

In the optional case in which the retaining element is fully outside the first non-circular mounting opening, the length of the quarter turn clip in the assembly direction "m" is even more shortened and consequently the packaging of the assembly in the assembly direction "m" is even more compact.

It is because, the closer the retaining surface to the forth contacting surface is, the more shortened length of the quarter turn clip in the assembly direction "m" can be achieved and consequently, a more compact packaging in the assembly direction can be achieved.

### DESCRIPTION OF THE FIGURES

The present specification is completed by a set of figures that illustrate a preferred embodiment and in no way limit the invention.
Figure 1 shows an explosion view of the sealing door assembly according to the invention.
Figure 2 shows a cross-sectional view of the sealing panel forming the sealing door assembly of the present invention.
Figure 3 shows a first perspective view of a quarter turn clip of the invention.
Figure 4 shows a second perspective view of a quarter turn clip of the invention.
Figure 5 shows a third perspective view of a quarter turn clip of the invention.
Figure 6 shows a perspective view of the sealing panel wherein the ramps configured in the second non-circular mounting opening are represented.
Figure 7a shows a first cross-sectional view of the sealing door assembly according to the pre-assembly position wherein the pre-assembly detent means and the counter pre-assembly detent means are represented.
Figure 7b shows a second cross-sectional view of the sealing door assembly according to the pre-assembly position wherein the additional anti-rotation means and the additional counter anti-rotation means are represented.
Figure 8a shows a first cross-sectional view of the sealing door assembly according to an intermediate position between the pre-assembly position and an assembly position.
Figure 8b shows a second cross-sectional view of the sealing door assembly according to an intermediate position between the pre-assembly position and an assembly position wherein the contact between the head of the quarter turn clip and the third contacting surface of the carrier panel is represented.
Figure 9 shows a cross-sectional view of the sealing door assembly according to the assembly position.
Figure 10 shows a partial perspective view of the sealing door assembly according to the intermediate position between the pre-assembly position and the assembly position.
Figure 11 shows a partial perspective view of the sealing door assembly according to the assembly position.
Figure 12 shows a cross-sectional view of another embodiment of the sealing door assembly according to the pre-assembly position.

### DETAILED DESCRIPTION OF THE INVENTION

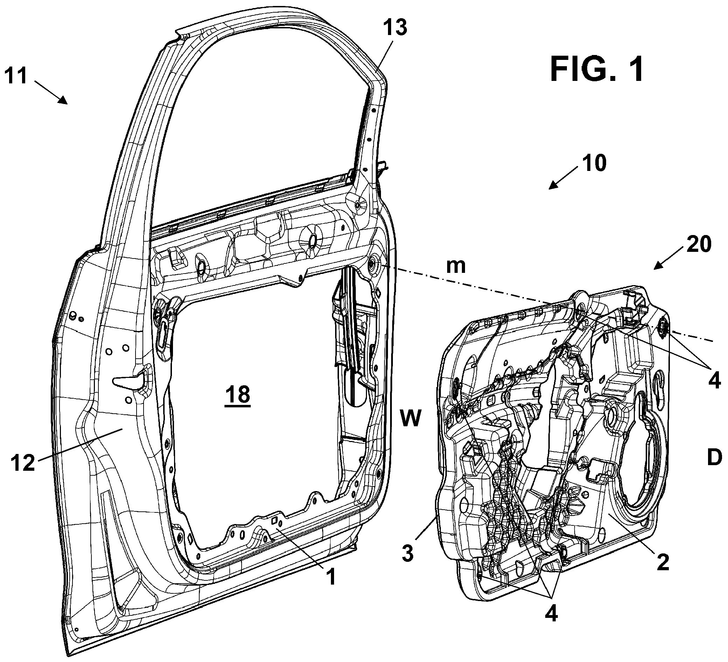

Figure 1 shows as explosion view of a vehicle door (11) having a sealing door assembly (10) according to the invention.

The vehicle door (11) comprises an upper window frame (13) and a door shell structure (12) having a door metal sheet (1) and a main opening (18).

The main opening (18) occupies a large portion of the surface of the door metal sheet (1) in order to access easily to the interior of the door shell structure (12) for carrying out the mounting/dismounting operations of the functional components housed inside the door shell structure (12) such as the window regulator, the loudspeaker or the door lock.

The sealing door assembly (10) comprises the door metal sheet (1) above described, and a sealing panel (20) having fixing means (4), wherein said fixing means (4) are configured to connect the sealing panel (20) with the door metal sheet (1) according to an assembly direction "m".

The assembly direction "m" is essentially perpendicular to the main surface of the sealing panel (20) and coincides with the direction of the main axle "s" of the quarter turn clips (5) which form part of the fixing means (4) and which are described in detail below. Here "direction" means an axis or main line that is the orientation without any particular sense, that is a mere line without any arrow.

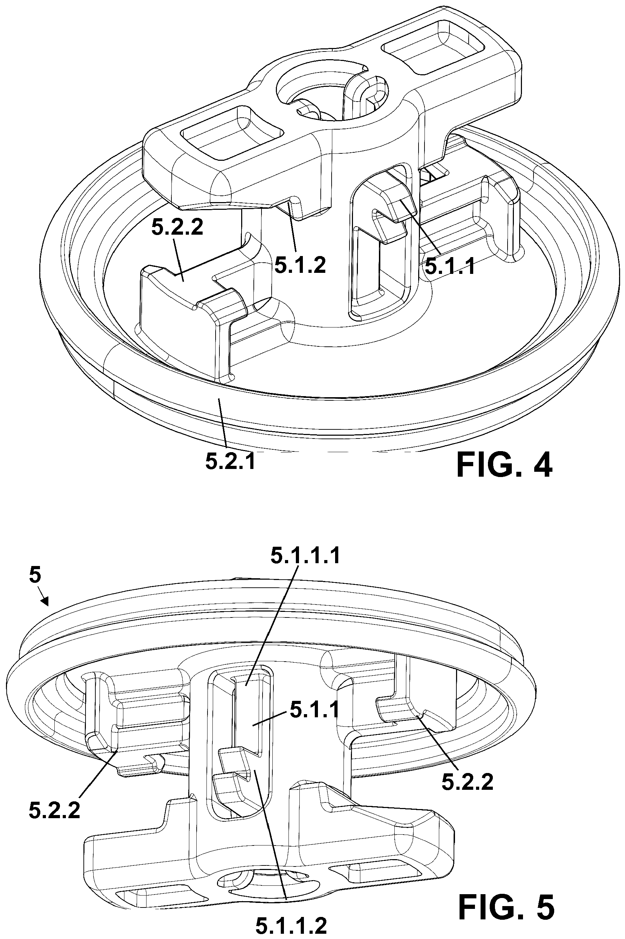

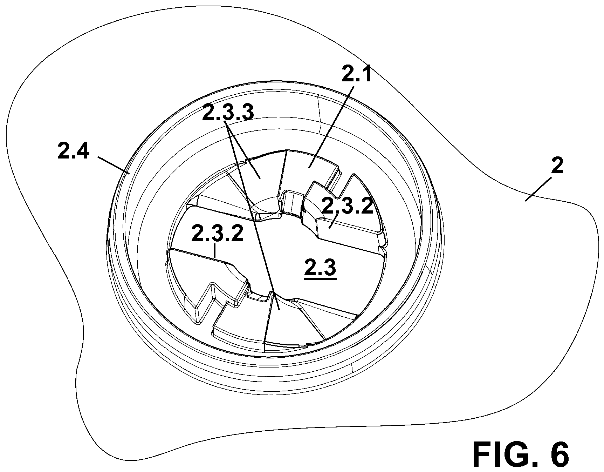

The sealing door assembly (10) is configured to adopt a pre-assembly position in which the sealing panel (20) is ready to be mounted on the door metal sheet (1), as figure 4 shows, and an assembly position in which both components are connected, as figure 6 shows. Said particular positions will be described in detail below.

Once the sealing panel (20) is connected to the door metal sheet (1) by the fixing means (4) according to the assembly position, said sealing panel (20) divides the vehicle door (11) into a wet area W and a dry area D. The sealing panel (20) creates a barrier against water/dust between the wet area W and the dry area D of the vehicle door (11).

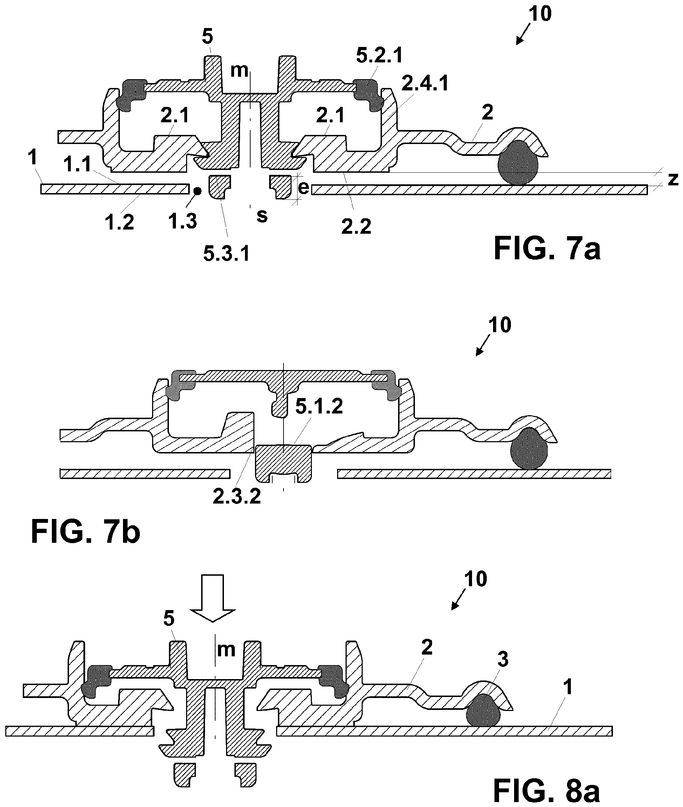

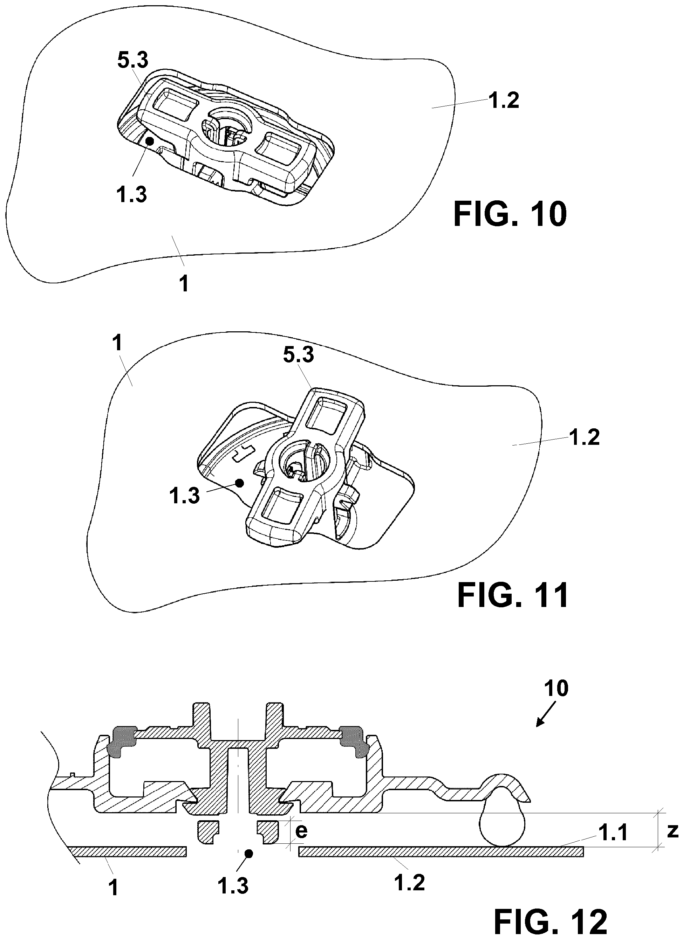

Particularly the door metal sheet (1) forming part of the sealing door assembly (10), comprises first non-circular mounting openings (1.3), as figures 10 and 11 show, a first contacting surface (1.1), and a second contacting surface (1.2), as figure 7a shows.

The first non-circular mounting openings (1.3) are configured in order to connect the sealing panel (20) and the door metal sheet (1).

These first non-circular mounting openings (1.3) are distributed along the perimeter of the door metal sheet (1) around the main opening (18). They are configured to allow the insertion of the quarter turn clips (5) described below in detail, and to allow the connection of the door metal sheet (1) and the sealing panel (2) by said quarter turn clips (5) when they are rotated.

The first contacting surface (1.1) comprises the surface of the door metal sheet (1) around the first non-circular mounting opening (1.3) which is configured to contact with one of the surfaces of the carrier panel (2), particularly the forth contacting surface (2.2) described below, as figure 7a shows.

The second contacting surface (1.2) comprises the surface of the door metal sheet (1) around the first non-circular mounting opening (1.3) which is configured to contact with the retaining surface (5.3.1) of the retaining element (5.3) of the quarter turn clip (5) described below. Said second contacting surface (1.2) is opposite to the first contacting surface (1.1).

The sealing panel (20) is configured to be mounted on the vehicle door (11) along the assembly direction "m" above described, in order to adopt the assembly position in which the sealing panel (20) and the door metal sheet (1) of the vehicle door (11) are connected.

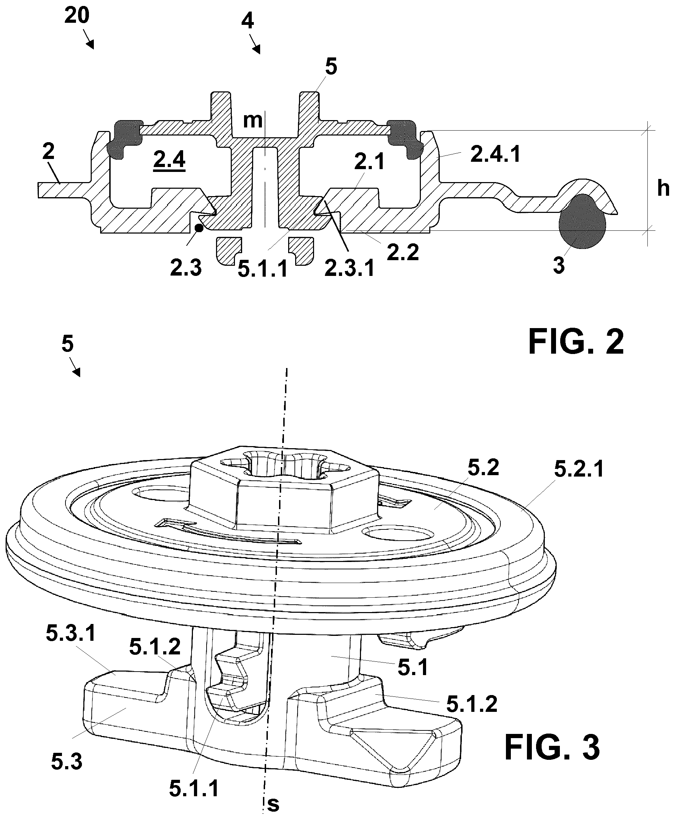

As figure 2 represents, the sealing panel (20) comprises a carrier panel (2), a third contacting surface (2.1), a forth contacting surface (2.2), a peripheral sealing strip (3), and fixing means (4) comprising second non-circular mounting openings (2.3), sealing housings (2.4), and quarter turn clips (5), wherein said fixing means (4) are configured to connect the sealing panel (20) with the door metal sheet (1) along the assembly direction "m".

As figure 1 shows, the carrier panel (2) is configured to cover the main opening (18) of the vehicle door (11) in order to divide the vehicle door (11) into a wet area W and a dry area D. Preferably it is made of plastic material which optionally can be reinforced with additional components such as fibers.

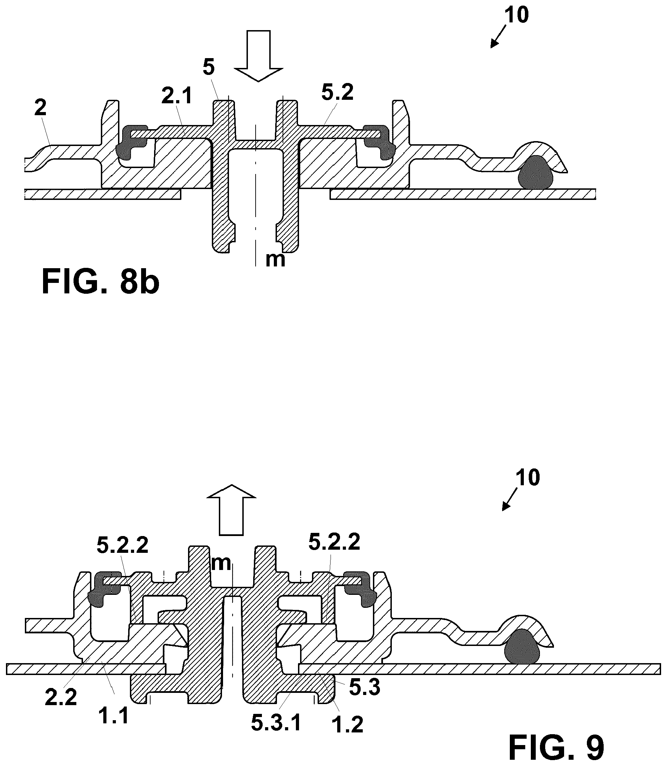

The third contacting surface (2.1) comprises the surface of the carrier panel (2) around the second non-circular mounting opening (2.3) which is configured to contact with the head (5.2) of the quarter turn clip (5) described in detail below, as figure 8b shows.

The forth contacting surface (2.2) comprises the surface of the carrier panel (2) around the second non-circular mounting opening (2.3) which is configured to contact with the first contacting surface (1.1) of the door metal sheet (1) in the assembly position, as figure 9 shows. Said forth contacting surface (2.2) is opposite to the third contacting surface (2.1).

The peripheral sealing strip (3) is arranged along the perimeter of one of the sides of the carrier panel (2), and particularly in the side of the carrier panel (2) configured to be in contact with the door metal sheet (1) when the sealing panel (20) and the door metal sheet (1) are connected.

As figure 9 shows, the peripheral sealing strip (3) is compressed and deformed due to the forces exerted in the assembly direction "m" by the fixing means (4), and particularly by the quarter turn clip (5) forming said fixing means (4), when the door metal sheet (1) and the sealing panel (20) are connected.

For the purpose of ensuring an appropriate compression of the peripheral sealing strip (3), preferably the fixing means (4) are located close to the peripheral sealing strip (3), and they are uniformly distributed in order to ensure a homogenous compression over the entire length of the peripheral sealing strip (3) .

Normally the peripheral sealing strip (3) is configured as an additional component applied on the carrier panel (2). It can be applied for example by extrusion, and it can be made of thermoplastic elastomer (TPE) .

As it has been disclosed above, the fixing means (4) are configured to connect the sealing panel (20) with the door metal sheet (1) along the assembly direction "m".

As figures 2 and 6 show, each of said fixing means (4) comprises a second non-circular mounting opening (2.3), a sealing housing (2.4) and a quarter turn clip (5).

Each of the second non-circular mounting openings (2.3) is configured in the carrier panel (2) in correspondence with a first non-circular mounting opening (1.3) of the door metal sheet (1) in order to connect the sealing panel (20) to the door metal sheet (1) .

The sealing housing (2.4) is configured to allow sealing the second non-circular mounting opening (2.3) by collaborating with the quarter turn clip (5) described below.

The sealing housing (2.4) comprises a circular wall (2.4.1) surrounding the second non-circular mounting opening (2.3) and protruding perpendicularly from the third contacting surface (2.1) in the assembly direction "m". The height of this circular wall (2.4.1) is configured in order to the sealing ring (5.2.1) of the head (5.1) of the quarter turn clip (5) described below is in contact with it (2.4.1) in both positions, the pre-assembly position and the assembly position.

According to a preferred configuration, said height of the circular wall (2.4.1) is adjusted to allow the contact between said circular wall (2.4.1) and the sealing ring (5.2.1) in the pre-assembly position and the assembly position, in order to keep the compact packaging of the sealing panel (20) and the compact packaging of the door sealing assembly (10) in the assembly direction "m".

As it has been above discussed, the quarter turn clip (5) is the element of the fixing means (4) particularly configured to connect the sealing panel (20) and the door metal sheet (1).

Each of the quarter turn clip (5) is pre-mounted in the carrier panel (2.3), and particularly in the second non-circular mounting opening (2.3) according to a predefined position.

The predefined position of the quarter turn clip (5) in the carrier panel (2) is defined by a position along the assembly direction "m", and by and angular position around the assembly direction "m". This predefined position allows the operator connects the sealing panel (20) with the door metal sheet (1) correctly in way and time.

The quarter turn clip (5), as figures 3-5 show, comprises a shaft (5.1), a head (5.2) placed at one end of the shaft (5.1) and comprising a sealing ring (5.2.1), and a retaining element (5.3) placed at an opposite end of the shaft (5.1) which comprises a retaining surface (5.3.1).

The shaft (5.1) extends along a longitudinal axis "s" of the quarter turn clip (5). The direction of the longitudinal axis "s" coincides with the assembly direction "m".

Said shaft (5.1) comprises pre-assembly detent means (5.1.1) collaborating with pre-assembly counter detent means (2.3.1) placed in the second non-circular mounting opening (2.3), as figures 2 and 3 show.

The pre-assembly detent means (5.1.1) and the pre-assembly counter detent means (2.3.1) are configured to retain, according to the predefined position, the quarter turn clip (5) in the carrier panel (2) in the pre-assembly position through collaboration between them.

The retention provided by pre-assembly detent means (5.1.1) and the pre-assembly counter detent means (2.3.1) mainly prevents the linear movement of the quarter turn clip (5) in the assembly direction "m" in order to ensure the predefined position. Additionally, it also prevents the rotating movement of the quarter turn clip (5) around the assembly direction "m" in order to ensure said predefined position, however the retention provided by pre-assembly detent means (5.1.1) and the pre-assembly counter detent means (2.3.1) against the rotating movement has not enough strength to keep the predefined angular position for all situations required by the car builder specifications.

In order to overcome the retention produced in the pre-assembly position by the pre-assembly detent means (5.1.1) and the pre-assembly counter detent means (2.3.1), the pre-assembly detent means (5.1.1) can be elastically deformable.

For example, and as figure 5 shows, the pre-assembly detent means (5.1.1) comprises a finger (5.1.1.1) extending in the assembly direction "m" which is fixed at one end to the shaft (5.1) of the quarter turn clip (5). The other end of the finger (5.1.1.1) is free in order to allow the finger (5.1.1.1) can be deformed according to a radial direction to the inside of the shaft (5.1) in order to overcome the pre-assembly counter detent means (2.3.1) and in this way the quarter turn clip (5) can be moved linearly to reach the door metal sheet (1).

According to an optional case, the pre-assembly detent means (5.1.1) comprise a snap (5.1.1.2) having two teeth, as figures 2-5 show. According to the example described above, the snap (5.1.1.2) having two teeth can be placed at the free end of the finger (5.1.1.1).

Regarding to the counter pre-assembly detent means (2.3.1), as figure 2 shows, they comprise a claw projected towards the inside of the second non-circular mounting opening (2.3) and provided for collaborating with the pre-assembly counter detent means (2.3.1), and particularly with the snap (5.1.1.2) having two teeth.

According to the invention, as figures 3 and 7b show, the shaft (5.1) of the quarter turn clip (5) comprises additional anti-rotation means (5.1.2) placed between the pre-assembly means (5.1.1) and the retaining element (5.3) described below.

Said additional anti-rotation means (5.1.2) are configured to collaborate with additional counter anti-rotation means (2.3.2) represented in figure 7b, which are placed in the second non-circular mounting opening (2.3) in order to prevent the rotational movement of the quarter turn clip (5) around the assembly direction "m" in the pre-assembly position

Said additional anti-rotation means (5.1.2) collaborating with the additional counter anti-rotation means (2.3.2) ensure the angular position of the quarter turn clip (5) according to the predefined position which cannot be ensured by the pre-assembly detent means (5.1.1) and the pre-assembly counter detent means (2.3.1) .

As figure 3 shows, the anti-rotation means (5.1.2) can comprise a square-shaped section.

The shaft (5.1) comprises at one of its ends, particularly the end which is farther from the door metal sheet (1) of the sealing door assembly (10), the head (5.2).

The head (5.2) is configured to prevent the quarter turn clip (5) can pass through the second non-circular mounting opening (2.3) of the carrier panel (2) when it is pushed into the door metal sheet (1). It is because the head (5.2) interferes with the third contacting surface (2.1) of the carrier panel (2) being around the second non-circular mounting opening (2.3) as figure 8b shows.

The head (5.2) comprises a sealing ring (5.2.1) configured to contact tightly the circular wall (2.4.1) of the sealing housing (2.4). In this way the sealing function of the second non-circular mounting (2.3) opening is ensured.

Said sealing ring (5.2.1) is arranged along the outer contour of the head (5.2) as it shows for example the figure 2. It comprises a compressible material in order to carry out a tight contact between the head (5.2) and the circular wall (2.4.1) of the sealing housing (2.4).

On the other hand, in order to ensure an optimal assembly tension in the assembly position, the head (5.2) can comprise two followers (5.2.2) which collaborate with two tension ramps (2.3.3) arranged in the second non-circular mounting opening (2.3) as figures 4, 5, 6 and 9 represent, in such a way that the rotational movement of the quarter turn clip (5) is transformed into a linear movement along the assembly direction "m" as the patent WO2018089045 discloses in detail.

Optionally the tension ramps (2.3.3) can be configured in the head (5.2), and the followers (5.2.2) can be configured in the second non-circular mounting opening (2.3) in order to achieve the same effect above described.

The last component forming part of the quarter turn clip (5) is the retaining element (5.3). It is placed at an opposite end of the shaft (5.1).

Said retaining element (5.3) is insertable through the first non-circular mounting opening (1.3) of the door metal sheet (1).

As figure 9 shows, the retaining element (1.3) has a retaining surface (5.3.1) configured to press on the second contacting surface (1.2) of the door metal sheet (1) in order to carry out the retention between the sealing panel (20) and the door metal sheet (1) according to the assembly position. This retention is carried out by rotating the quarter turn clip (5).

In addition to the elements described above, the sealing panel (20), optionally can comprise other functional components typically mounted on a vehicle door (11) such as a loudspeaker, a window regulator, a padding, door handle, electric wiring or an airbag sensor. It allows a modular assembly wherein the mounting time is minimized and mounting process is simplified.

As it has been discussed above, the sealing door assembly (10) is configured to adopt a pre-assembly position and an assembly position.

Once all the components comprising the sealing door assembly (10) have been described, said pre-assembly position and said assembly position can be described in further detail.

Particularly according to the pre-assembly position of the sealing door assembly (10) represented in the figures 7a and 7b, the components forming said sealing door assembly (10) has the following particular relative disposition:
- each fixing means (5), is aligned with the corresponding first non-circular mounting opening (1.3) in such a way that each quarter turn clip (4) is configured to pass through the corresponding first non-circular mounting opening (1.3),
- the peripheral sealing strip (3) is uncompressed and in contact with the first contacting surface (1.1),
- the forth contacting surface and the first contacting surface (1.1) are separated in the assembly direction "m" a dimension "z",
- the quarter turn clip (5) has a first angular position and its linear movement along the assembly direction "m", and its rotational movement around the assembly direction "m" are prevented by the collaboration between the pre-assembly detent means (5.1.1) and the pre-assembly counter detent means (2.3.1). The rotational movement around the assembly direction "m" of the quarter turn clip (5) is also prevented by the collaboration between the additional anti-rotation means (5.1.2) and the additional counter anti-rotation means (2.3.2), as particularly shows the figure 7b.
- the retaining surface (5.3.1) is placed between the forth contacting surface (2.2) and the first contacting surface (1.1).
- the sealing ring (5.2.1) is in contact with the wall (2.4.1) of the sealing housing (2.4) .

According to the assembly position of the sealing door assembly (10), represented in the figure 9, the components forming said sealing door assembly (10) has the following particular relative disposition:
- the quarter turn clip (5) has a second angular position different from the first angular position,
- the retaining surface (5.3.1) is in contact with the second contacting surface (1.2),
- the sealing ring (5.2.1) is in contact with the wall (2.4.1) of the sealing housing (2.4) .
- the forth contacting surface (2.2) is in contact with the first contacting surface (1.1) .

According to an optional case represented in the figure 12, the thickness "e" of the retaining element (5.3) is less than the distance "z" in the assembly direction "m" between the forth contacting surface (2.2) and the first contacting surface (1.1) in the pre-assembly position represented in the figure 7a.

According to an option of the above particular case also represented in the figure 12, in the pre-assembly position, the retaining element (5.3) is fully outside the first non-circular mounting opening (1.3).

Once the pre-assembly position and the assembly position of the sealing door assembly (10) have been described, here below it is detailed the steps of the assembly process of the sealing door assembly (10) according to one example of the invention.

Firstly, the operator positions the sealing panel (20) facing the door metal sheet (1) according to the pre-assembly position described above and represented in figures 7a and 7b. According to this position the peripheral sealing ring (3) is in contact with the first contacting surface (1.1), but remains uncompressed.

According to this pre-assembly position, the operator can check visually that the quarter turn clip (5) is pre-mounted in the sealing panel (2) according to the correct predefined position, for example by checking some visual mark provided in the surface of the carrier panel (2) and in the head (5.2) of the quarter turn clip (5) .

This correct predefined position in which the quarter turn clip (5) cannot move either according to a linear movement along the assembly direction "m" or according to a rotational movement around the assembly direction "m", is ensured by the pre-assembly detent means (5.1.1) and the pre-assembly counter detent means (2.3.1) and by the additional anti-rotation means (5.1.2) and the additional counter anti-rotation means (2.3.2) described above.

Once the correct predefined position of the quarter turn clip (5) has been checked, and once the sealing panel (20) is arranged facing the door metal sheet (1) according to the pre-assembly position, the quarter turn clip (5) is pushed into the first non-circular mounting opening (1.3) along the assembly direction "m", in order to the quarter turn clip (5) is inserted through the first non-circular mounting opening (1.3) .

In order to make possible this linear movement along the assembly direction "m", the operator must overcome the forces exerted by the pre-assembly detent means (5.1.1) and the pre-assembly counter detent means (2.3.1) .

As figure 8b shows, this linear movement along the assembly direction "m" is stopped when the head (5.2) of the quarter turn clip (5) interferes with the third contacting surface (2.1) of the carrier panel (2).

According to this position represented in the figures 8a, 8b and 10, the sealing door assembly (10) adopts an intermediate position between the pre-assembly position and the assembly position wherein the retaining surface (5.3.1) of the retaining element (5.3) is faced to the second contacting surface (1.2), and both surfaces are not in contact.

At this moment, the quarter turn clip (5) is ready to be rotated in order to reach the assembly position represented in the figures 9 and 11. The rotation of the quarter turn clip (5) normally is 90° or more, and according to a particular case of the present invention around 100°.

Due to the tension ramps (2.3.3) arranged in the second non-circular mounting opening (2.3) collaborating with the followers (5.2.2) arranged in the head (5.2) of the quarter turn clip (5), the rotational movement of the quarter turn clip (5) is transformed into a linear movement along the assembly direction "m". This linear movement makes that the retaining surface (5.3.1) of the retaining element (5.3) contacts with the second contacting surface (1.2) of the door metal sheet (1), reaching in this way the assembly position represented in the figures 9 and 11.

Therefore, in this step in which the quarter turn clip is moved from the intermediate position to the assembly position along the assembly direction "m", the sense of the assembly direction "m" in which the quarter turn clip (5) linearly moves, is opposite to the sense of the assembly direction "m" along which the quarter turn clip (5) moves when it passes from the pre-assembly position to the intermediate position as the arrows represented in figures 8a, 8b and 9 show.

As figure 9 shows, according to the assembly position, the sealing ring (5.2.1) of the head (5.2) of quarter turn clip (5) contacts tightly the circular wall (2.4.1) of the sealing ring (2.4), and at the same time, the peripheral sealing strip (3) is uniformly compressed over its entire length due to the forces exerted by the quarter turn clips (5).

In this way, both, the sealing of the main opening (18) of the vehicle door (11) and the sealing of each of the second non-circular mounting openings (2.3) of the carrier panel (2) are completely ensured, and at the same time, due to the reduced length of the quarter turn clip (5) in the assembly direction "m", and consequently, the reduced height of the circular wall (2.4.1) of the sealing housing (2.4), the sealing door assembly (10) forms compact packaging.

## Claims

1. Sealing door assembly for vehicle doors comprising,
a) a door metal sheet (1) having:
• first non-circular mounting openings (1.3)
• a first contacting surface, (1.1)
• a second contacting surface (1.2) being opposite to the first contacting surface, (1.1),
b) a sealing panel (20) comprising:
• a carrier panel (2),
• a third contacting surface (2.1),
• a forth contacting surface (2.2), being opposite to the third contacting surface (2.1),
• a peripheral sealing strip (3) being around the perimeter of the sealing panel (2),
• fixing means (4) configured to connect the sealing panel (20) with the door metal sheet (1) along an assembly direction m, wherein each fixing means (4) comprises:
∘ a second non-circular mounting opening (2.3),
∘ a sealing housing (2.4) comprising a circular wall (2.4.1) surrounding the second non-circular mounting opening (2.3) and protruding perpendicularly from the third contacting surface (2.1) along the assembly direction m,
∘ a quarter turn clip (5) having a shaft (5.1) which extends along a longitudinal axis s of the quarter turn clip (5) wherein said longitudinal axis s coincides with the direction of the assembly direction m, wherein said shaft (5.1) comprises pre-assembly detent means (5.1.1) configured to collaborate with pre-assembly counter detent means (2.3.1) placed in the second non-circular mounting opening (2.3), a head (5.2) placed at one end of the shaft (5.1) and comprising a sealing ring (5.2.1) configured to contact tightly the circular wall (2.4.1) of the sealing housing (2.4), and a retaining element (5.3) placed at an opposite end of the shaft (5.1), wherein said retaining element (5.3) is insertable through the first non-circular mounting opening (1.3), and wherein said retaining element (5.3) has a retaining surface (5.3.1) configured to press on the second contacting surface (1.2) of the door metal sheet (1),
wherein the sealing door assembly (10) is configured to adopt a pre-assembly position and an assembly position,
wherein according to the pre-assembly position:
• each fixing means (4) is aligned with the corresponding first non-circular mounting opening (1.3) in such a way that each quarter turn clip (5) is configured to pass through the corresponding first non-circular mounting opening (1.3),
• the peripheral sealing strip (3) is uncompressed and in contact with the first contacting surface (1.1),
• the forth contacting surface (2.2) and the first contacting surface (1.1) are separated in the assembly direction "m" a dimension "z",
• the quarter turn clip (5) has a first angular position and both, its linear movement along the assembly direction m, and its rotational movement around the assembly direction m are prevented by the collaboration between the pre-assembly detent means (5.1.1) and the pre-assembly counter detent means (2.3.1),
wherein according to the assembly position:
• the quarter turn clip (5) has a second angular position different from the first angular position,
• the retaining surface (5.3.1) is in contact with the second contacting surface (1.2),
• the forth contacting surface (2.2) is in contact with the first contacting surface (1.1),
• the sealing ring (5.2.1) contacts the circular wall (2.4.1) of the sealing housing (2.4),
**characterized in that** in the pre-assembly position the retaining surface (5.3.1) is placed between the forth contacting surface (2.2) and the first contacting surface (1.1),
**in that** in the pre-assembly position the sealing ring is in contact with the wall (2.4.1) of the sealing housing (2.4),
and **in that** the shaft (5.1) of the quarter turn clip (5) comprises additional anti-rotation means (5.1.2) placed between the pre-assembly detent means (5.1.1) and the retaining element (5.3), and additional counter anti-rotation means (2.3.2) placed in the second non-circular mounting opening (2.3) configured to prevent the rotational movement around the assembly direction m of the quarter turn clip (5) in the pre-assembly position.

2. Sealing door assembly for vehicle doors according to claim 1 wherein the thickness e of the retaining element (5.3) is less than the distance z in the assembly direction m between the forth contacting surface (2.2) and the first contacting surface (1.2) in the pre-assembly position.

3. Sealing door assembly for vehicle doors according to claim 2 wherein in the pre-assembly position the retaining element (5.3) is fully outside the first non-circular mounting opening (1.3).

4. Sealing door assembly for vehicle doors according to claim 1 wherein the pre-assembly detent means (5.1.1) comprises a snap (5.1.1.2) having two teeth.

5. Sealing door assembly for vehicle doors according to claim 1 wherein the additional anti-rotation means (5.2.1) has a square-shaped section.
